# EUROPÄISCHE PATENTSCHRIFT

(11) **EP 2 359 046 B1**
(45) Veröffentlichungstag und Bekanntmachung des Hinweises auf die Patenterteilung: **04.07.2018**
(21) Anmeldenummer: 09760727.9
(22) Anmeldetag: 12.11.2009
(51) Int. Cl.: F16L 27/087, F16C 19/50

(54) **WALZENANTRIEB MIT DREHDURCHFÜHRUNG**
ROLL DRIVE WITH ROTARY UNION
ENTRAINEMENT DE ROULEAU AVEC PASSAGE ROTATIF

(30) Priorität: 13.11.2008 DE 102008057265; 03.06.2009 DE 102009023741
(43) Veröffentlichungstag der Anmeldung: 24.08.2011
(73) Patentinhaber: SMS group GmbH, 40237 Düsseldorf (DE)
(72) Erfinder: GRIMMEL, Rüdiger, 57250 Netphen (DE); SUNDERMANN, Christoph, 57271 Hilchenbach (DE); BERKHOLZ, Uwe, 57518 Betzdorf (DE)
(74) Vertreter: Klüppel, Walter
(86) Internationale Anmeldenummer: PCT/EP2009/008075
(87) Internationale Veröffentlichungsnummer: WO 2010/054822

(56) Entgegenhaltungen:
- EP-A1- 0 570 696
- EP-A2- 0 974 782
- DE-A1- 3 417 588
- DE-A1-102004 023 231
- DE-B3-102004 056 818
- US-A- 3 533 557
- US-A- 4 294 454

## Beschreibung

Die Erfindung bezieht sich auf Walzenantrieb mit einer Drehdurchführung zur Zufuhr und/oder zur Abfuhr eines druckbeaufschlagten Mediums in einen bzw. aus einem axialen Hohlraum eines sich drehenden Maschinenteils mit einem gerätefesten, sich nicht drehenden Durchführungsteil, einem sich drehenden Durchführungsteil und mit Lagermitteln sowie mit Dichtmitteln, die in einer radialen Dichtebene zwischen dem sich drehenden Durchführungsteil und dem gerätefesten Durchführungsteil wirksam sind.

Drehdurchführungen umfassen generell einen gerätefesten, sich nicht drehenden Durchführungsteil und einen sich mit dem drehenden Maschinenteil drehenden Durchführungsteil, wobei Dichtmittel zwischen dem gerätefesten und dem sich drehenden Durchführungsteil angeordnet sind. Eine solche Drehdurchführung wird zur Versorgung von Walzen oder Rollen mit Kühlmittel benutzt, die gewissermaßen Achsen oder Wellen darstellen, welche an ihren Enden über Lager gestützt werden. Unter der schweren Last erleiden diese sich drehenden Maschinenteile eine gewisse Achsdurchbiegung, was zu sogenannten Winkelfehlern an den Achs- oder Wellenenden führt. Der Winkelfehler bedeutet eine Verschiebung und Kippung der radialen Endflächen des sich drehenden Maschinenteils und damit auch des sich drehenden Durchführungsteils, wenn dieses starr mit dem sich drehenden Maschinenteil verbunden ist. Dies führt zu Abdichtungsproblemen.

DE 10 2004 023 231 A1, EP 0 974 782 A1, US 3,533,557 und US 4,294,454 zeigen jeweils Einrichtungen mit einer Drehdurchführung für die Überleitung einer in einem Flüssigkeitskanal geführten, unter Druck stehenden Flüssigkeit aus einem stillstehenden Vorrichtungsteil in ein rotierendes Vorrichtungsteil, oder umgekehrt.

Aus DE 34 17 588 ist eine gekrümmte Lagereinheit zur Führung der Drehbewegung oder einer auf einer gekrümmten Bahn erfolgenden Bewegung eines Maschinenteils gegenüber einem stationären Teil bekannt.

Aus der DE 10 2004 056 818 B3 ist eine Drehdurchführung bekannt, deren sich drehender Durchführungsteil eine Hülse aufweist. Der sich drehende Maschinenteil umfasst einen axialen Hohlraum mit einem Hohlraumeinsatz. Eine Buchse hat eine an den Hohlraum angepasste Außenseite. Das sich drehende Maschinenteil ist über Lager abgestützt, die eine gewisse Schwenkung des Achsenendes zulassen. Dabei ist die Buchse des Hohlraumeinsatzes mit einer balligen Innenseite ausgebildet. Die Hülse des sich drehenden Durchführungsteils ist mit einem Außendurchmesser passend zu dem kleinsten Durchmesser der balligen Innenseite der Buchse ausgebildet. Bei dieser Konstruktion sind die Dichtmittel zwischen dem gerätefesten und dem sich drehenden Maschinenteil in einer radialen Ebene zur Achse des sich drehenden Durchführungsteils wirksam und können sich gegeneinander verschieben, während sie sich gleichzeitig relativ zueinander drehen. Wenn bei starker Belastung sich das drehende Maschinenteil durchbiegt und das Achsenende schwenkt, kann der sich drehende Durchführungsteil auf der balligen Innenseite der Buchse um den Betrag des Winkelfehlers abrollen, so dass der sich drehende Durchführungsteil achsparallel bleibt und es zu keinem Verkanten der Dichtmittel in der radialen Dichtebene kommt. Dadurch soll eine gleichbleibend gute Dichtwirkung in der radialen Dichtebene zu erwarten sein. Die aus der DE 10 2004 056 818 B3 bekannte Drehdurchführung ist als stirnseitig angeflanschte Drehdurchführung ausgebildet.

Häufig ist es jedoch nicht möglich, stirnseitige Anschlüsse anzubringen. Insbesondere bei großen Wellen in der Antriebstechnik, insbesondere bei Walzenantrieben, setzt man radiale Drehdurchführungen ein, um eine Medieneinleitung von außen in die Welle zu ermöglichen, beispielsweise an eine Welle, an die eine Zahngelenkspindel angelenkt ist. In diesem Fall weist ein ortsfester Drehdurchführungsteil einen Zufuhrring auf, der über ein Gleitlager gegenüber einem sich im Inneren des ortsfesten Drehdurchführungsteils drehenden Drehdurchführungsteil gelagert ist. Durch eine radiale Zuführung tritt ein Schmiermittel durch den Zufuhrring hindurch in einen Hohlraum zwischen den beiden Drehdurchführungsteilen und aus dem Hohlraum über eine in dem sich drehenden Drehdurchführungsteil verlaufende radiale Leitung in dessen Inneres.

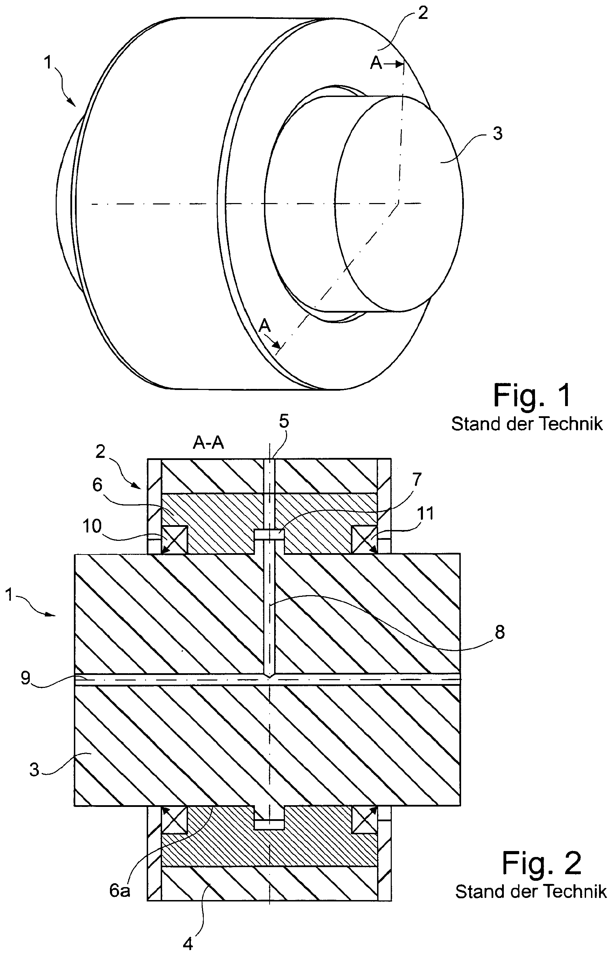

Eine derartige Drehdurchführung 1 (in Fig. 1 in perspektivischer Darstellung und in Fig. 2 in einer Schnittdarstellung entsprechend einer Schnittlinie A - A aus Fig. 1 dargestellt) nach dem Stand der Technik umfasst einen gerätefesten Drehdurchführungsteil 2, der einen sich drehenden Drehdurchführungsteil 3, d. h. eine Welle, mantelförmig radial umgibt. In einem Gehäuse 4 des Drehdurchführungsteils 2 ist eine in radialer Richtung verlaufende Medienzuleitung 5 angebracht, die durch einen sich mit dem Gehäuse 4 mitdrehenden Gleitring 6 hindurchtritt und ein Medium zu einer den Drehdurchführungsteil 3 ringförmig umgebende Kammer 7 zuführt. Über eine sich mit dem Drehdurchführungsteil 3 mitdrehende weitere radial verlaufende Medienzuleitung 8 ist die Hohlkammer 7 mit einer in Richtung der Längsachse des Drehdurchführungsteils 3 verlaufenden Medienleitung 9 verbunden. Der Gleitring 6 bildet mit der Mantelfläche des Drehdurchführungsteils 3 einen Schmierspalt 6a von etwa 0,5 mm Höhe und ist über stirnseitig an dem Drehdurchführungsteil 3 angebrachte Dichtungen 10, 11 nach außen abgedichtet. Bei dieser Konstruktion muss ein verhältnismäßig großes Spiel zwischen dem Gleitring 6 und dem Drehdurchführungsteil 3 in Kauf genommen werden, die den Aufbau eines hohen Schmiermitteldrucks nicht erlaubt.

Nachteilig an einer derartigen sowie an anderen bekannten Lösungen ist, dass stets ein Spiel zwischen der Lagerung und der Welle vorhanden ist. Nachteilig ist auch der Eigenschmierstoffverbrauch der Lagerung. Weitere Nachteile sind die Temperaturerhöhung der eingesetzten Medien im Laufe des Betriebs sowie das durch großes Spiel zwischen dem sich drehenden und dem ortsfesten Drehdurchführungsteil verursachte Dichtungsproblematik.

Es ist die Aufgabe der Erfindung, die Nachteile des Standes der Technik zu vermeiden und zusätzlich die Möglichkeit zu schaffen, für einen Walzenantrieb Dichtungen für höhere Drücke einzusetzen, insbesondere für Drücke von mehr als 2 bar. Erfindungsgemäß wird diese Aufgabe bei einem Walzenantrieb mit einer Drehdurchführung der eingangs genannten Art dadurch gelöst, dass die Lagermittel einzelne Stützlager in Form von Stützrollen umfassen, die den radialen Abstand zwischen dem gerätefesten Drehdurchführungsteil und dem sich drehenden Durchführungsteil festlegen, wobei die Rollenlager der Stützrollen unter einer spielfreien Vorspannung stehen, derart, dass dadurch ein spielfreier Lauf des sich drehenden Drehdurchführungsteils erreicht wird.

Damit sind anstelle einer umlaufenden Lagerung, wie sie nach dem Stand der Technik vorgesehen ist, nur punktuelle Abstützelemente erforderlich, was zu einer deutlich geringeren Entwicklung von Reibungswärme im Vergleich zum Stand der Technik führt. Durch die Erfindung werden die Nachteile des Standes der Technik überwunden. Durch die Erfindung ist es möglich, eine funktionstüchtige Drehdurchführung in eine Flachzapfenspindel einzubauen.

Vorteilhafte Weiterbildungen der Erfindung ergeben sich aus den Unteransprüchen.

Durch den Einsatz der Stützlager in Form der Stützrollen wird eine feste Abstützung des sich drehenden Drehdurchführungsteils gegenüber dem ortsfesten Drehdurchführungsteil geschaffen, die bei hoher Stabilität im Bereich der Lager anstelle von Gleitreibung nur Rollreibung verursacht und somit zu einer weit geringeren Erwärmung des Kühl- und Schmiermediums führt, als dies beim Stand der Technik der Fall ist. Es kommt hinzu, dass bei den nun möglichen höheren Drücken Dichtungen eingesetzt werden können, die nur geringe Rundlaufabweichungen, beispielsweise von weniger als 0,2 mm, ausgleichen können. Daher müssen die tatsächlichen Rundlaufabweichungen zwischen der Drehdurchführung und der Welle sogar deutlich kleiner sein als dieser Wert. Es stellt sich jedoch heraus, dass sich derartig geringe Rundlaufabweichungen beim Einsatz der Erfindung erreichen lassen. Gemäß der Erfindung wird das Gewicht des feststehenden Drehdurchführungsteils von mindestens zwei Rollen oder Rollenpaaren, den Stützrollen, so auf die Welle übertragen, dass die in der Medienzuführung eingebaute Dichtung präzise auf der Mantelwand der Welle, des sich drehenden Drehdurchführungsteils, anliegt und damit nur eine geringe Beweglichkeit der Dichtlippen notwendig ist. Dichtungen für höhere Drücke, die nur eine geringe Flexibilität aufweisen, können somit eingesetzt werden.

Die Rollen oder Rollenpaare, die die Stützrollen bilden, sind unabhängig von einer Schmierung durch das durchzuleitende Schmiermedium. Dies bedeutet, dass sich mit einer erfindungsgemäßen Drehdurchführung beliebige flüssige oder gasförmige Medien durchgeleitet werden.

Vorzugsweise werden die Stützrollen durch Achsen, Wellen, Naben und/oder durch stirnseitige Führungsmittel, insbesondere durch Bünde, geführt.

Gemäß dem Grundprinzip der Erfindung sind in einer radialen Ebene an einem äußeren Zufuhrring für die Medienversorgung wenigstens zwei Stützrollen oberhalb der Wellenachse des sich drehenden Drehdurchführungsteils angeordnet, die gegenüber dem sich nicht drehenden Drehdurchführungsteil abgestützt sind. Alternativ sind die wenigstens zwei Stützrollen unter einem spitzen oder einem stumpfen Winkel zueinander angeordnet.

In einer besonders vorteilhaften Ausgestaltung der Erfindung sind drei Stützrollen, insbesondere in gleichen Abständen zueinander, vorgesehen. Prinzipiell kann die Lagerung symmetrisch oder asymmetrisch erfolgen.

Durch den Einsatz einer spielfreien Vorspannung der Rollenlager der Stützrollen lässt sich ein spielfreier Lauf des sich drehenden Drehdurchführungsteils bei präzisem Rundlauf erreichen.

Ferner kann vorgesehen werden, dass die Stützrollen jeweils in einem sie tragenden Gehäuse, insbesondere in einem Wagen, integriert sind.

Die Stützlager lassen sich sowohl innerhalb oder außerhalb eines von dem Medium durchflossenen Raums anordnen.

Nachstehend wird die Erfindung in einem Ausführungsbeispiel näher erläutert. Es zeigen:
- Fig. 3: eine seitliche Draufsicht auf eine erste Ausführungsform einer Drehdurchführung, deren gerätefester Drehdurchführungsteil über zwei Stützrollen gegenüber dem drehender Drehdurchführungsteil abgestützt ist,
- Fig. 4: eine Schnittansicht der Drehdurchführung aus Fig. 3 entlang einer Schnittlinie A - A,
- Fig. 5: eine seitliche Draufsicht einer weiteren Ausführungsform einer Drehdurchführung, deren sich gerätefester Drehdurchführungsteil über drei gleichbeabstandete Stützrollen gegenüber dem sich drehenden Drehdurchführungsteil abgestützt ist,
- Fig. 6: eine seitliche Draufsicht einer dritten Ausführungsform der Erfindung, in der vier gleichbeabstandete Stützrollen den gerätefesten Drehdurchführungsteil gegenüber dem sich drehenden Drehdurchführungsteil abstützen,
- Fig. 7: eine Schnittansicht der dritten Ausführungsform gemäß Fig. 6 entlang einer Schnittlinie B - B,
- Fig. 8: eine Variante der dritten Ausführungsform in seitlicher Draufsicht und
- Fig. 9: eine Schnittansicht der Variante gemäß Fig. 8 entlang einer Schnittlinie B-B.

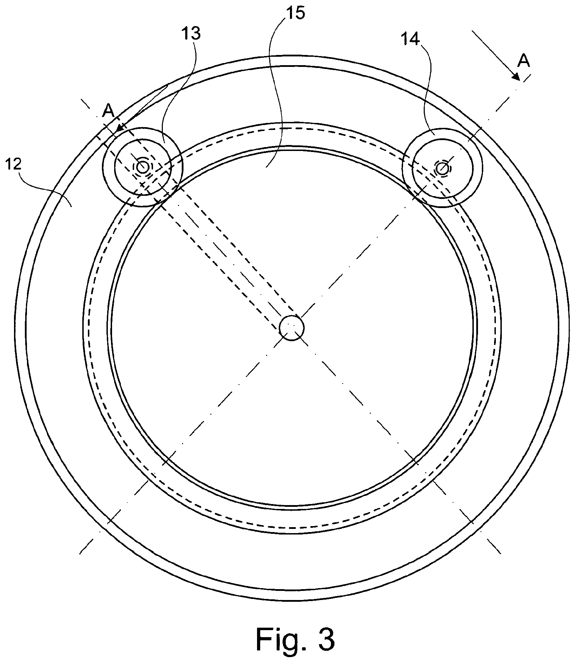

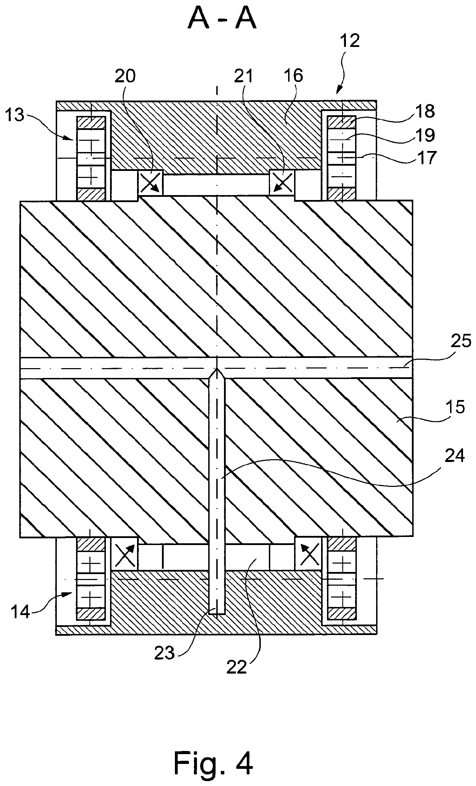

In einer ersten Ausführungsform der Erfindung (Fig. 3, 4) weist eine Drehdurchführung einen gerätefesten Drehdurchführungsteil 12 auf, der über zwei Paare von stirnseitig an dem Drehdurchführungsteil 12 angebrachten Stützrollen 13, 14 gegenüber einem sich drehenden Drehdurchführungsteil 15 abgestützt ist. Die beiden Paare von Stützrollen 13, 14 sind in einem rechten Winkel zueinander angeordnet.

Über eine Welle oder über seitliche Fixiermittel sind die Positionen der Stützrollen 13, 14 gegenüber einem Gehäuseteil 16 des Drehdurchführungsteils 12 festgelegt. Zwischen einer Rollenachse 17 und einem Mantelteil 18 befindet sich jeweils ein ringförmiges Lager 19.

Die Stützrollen 13, 14 befinden sich außerhalb eines durch Dichtungen 20, 21 abgedichteten ringförmigen Hohlraums 22, der den Drehdurchführungsteil 15 umgibt. In dem Gehäuseteil 16 ist eine Medienzuführung 23 angebracht, die zu dem Hohlraum 22 führt. Von dort wird ein zum Schmieren und/oder Kühlen dienendes Medium in einen radial verlaufenden Kanal 24 im Inneren des Drehdurchführungsteils 15 weitergeleitet. Der Kanal 24 mündet in einen in Richtung der Längsachse des Drehdurchführungsteils 15 verlaufenden Kanal 25.

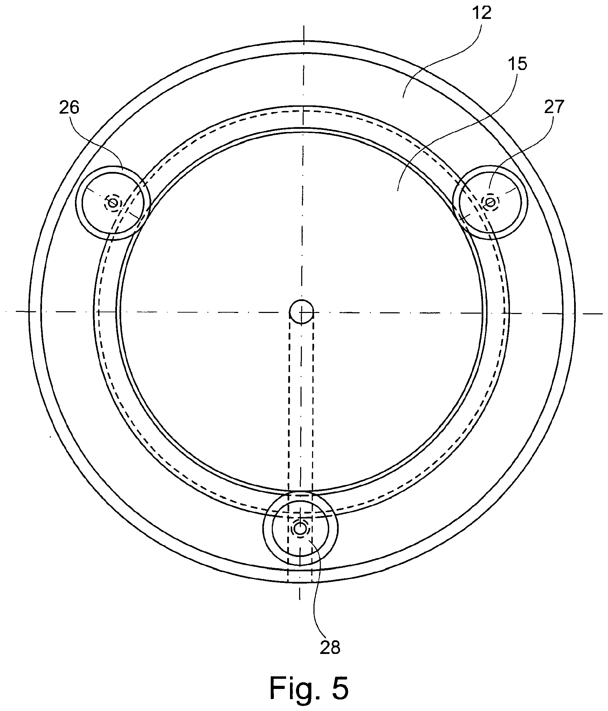

In ähnlicher Weise ist eine zweite Ausführungsform einer erfindungsgemäßen Drehdurchführung (Fig. 5) ausgestaltet. Hierbei sind drei Stützrollen 26, 27 und 28 vorgesehen, die in gleichen Abständen angeordnet sind, so dass ihre Mittelpunkte die Ecken eines gleichseitigen Dreiecks bilden. Damit hat diese Konstruktion gegenüber der in Fig. 3, 4 dargestellten Konstruktion, in der die Stabilität des Aufbaus nur durch das Eigengewicht des ortsfesten Drehdurchführungsteils definiert ist, den Vorteil, dass ein gleichmäßigerer Lauf gewährleistet wird. Durch Verändern der Achspositionen der Stützrollen 26, 27 und 28 kann sogar ein spielfreier Lauf des sich Drehdurchführungsteils 12 und damit der Dichtungen 20, 21 gegenüber dem Drehdurchführungsteil 15 eingestellt werden.

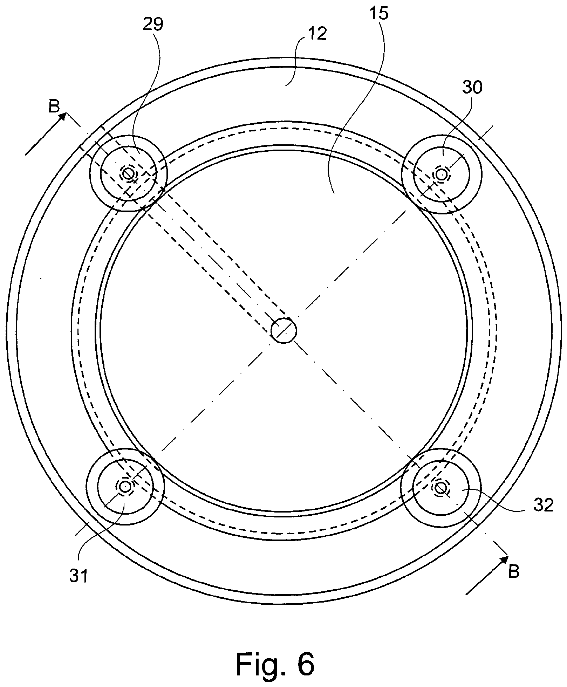

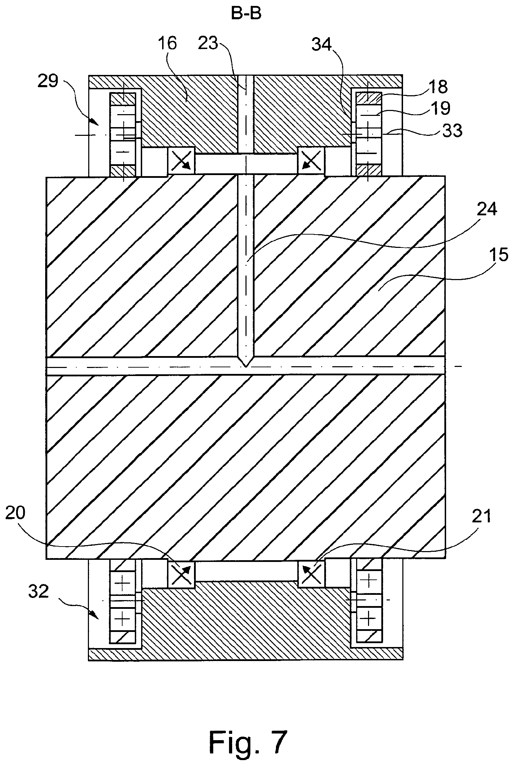

Eine weitere Ausführungsform (Fig. 6, 7) einer Drehdurchführung umfasst vier Stützrollen 29, 30, 31 und 32, deren Mittelpunkte die Ecken eines Quadrates bilden. Im Unterschied zu der in Fig. 3 dargestellten Ausführungsform wird die Achse der Stützrollen 29, 30, 31 und 32 von einer Welle 33 (Fig. 7) gebildet, die über einen Wellenzapfen oder einen Laufbund 34 seitlich gegenüber dem Gehäuseteil 16 gelagert ist. Im Übrigen unterscheidet sich diese Ausführungsform nicht im Aufbau von den in Fig. 3 bis 5 dargestellten Ausführungsformen. Ein Vorteil dieser Ausführungsform besteht darin, dass größere Axialkräfte übertragen werden können.

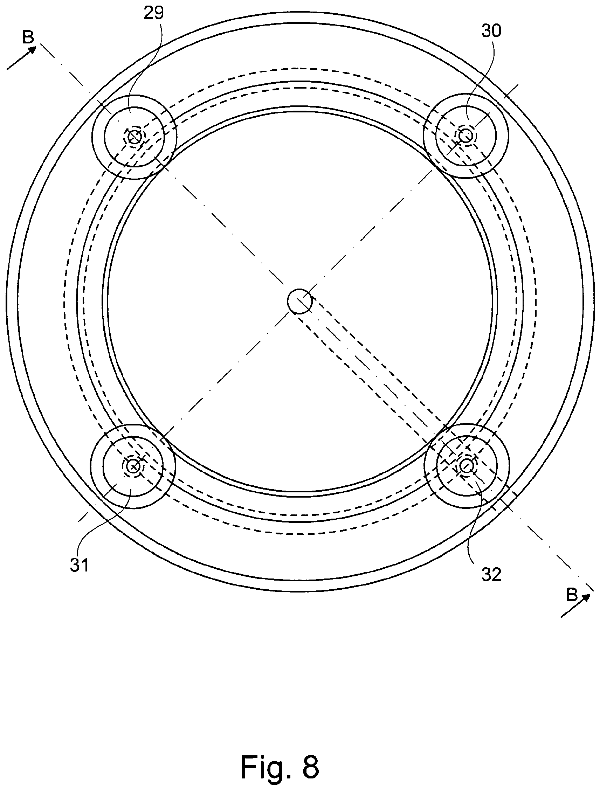

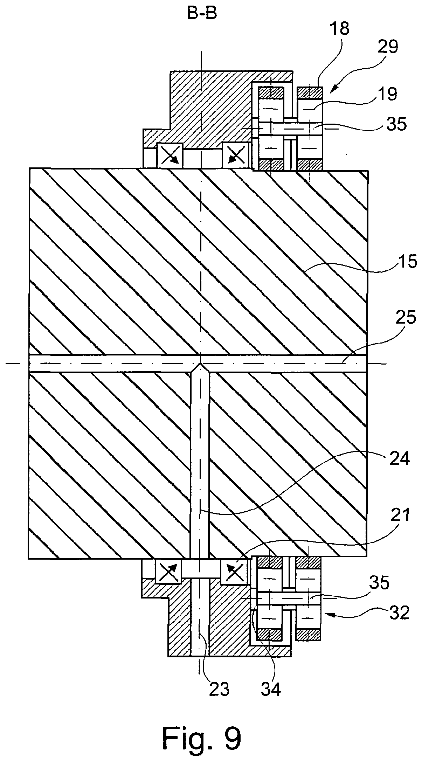

In einer letzten Ausführungsform (Fig. 8, 9) sind in einem ebenfalls vier Paare von Stützrollen 29 bis 32 umfassenden Drehdurchführungsteil 12 die Paare der Stützrollen 29 bis 32 im Unterschied zu den oben beschriebenen Ausführungsformen nicht einander gegenüberliegend auf den beiden Stirnseiten des Drehdurchführungsteils 12 angebracht, sondern nebeneinanderliegend und durch eine gemeinsame Welle 35 miteinander verbunden auf einer der beiden Stirnseite. Wie in den anderen Ausführungsbeispielen befinden sich die Stützrollen 29 bis 32 außerhalb des Gehäuseteils 16. Es versteht sich, dass bei der Ausgestaltung der Stützrollen 29 bis 32 als Zwillingsrollen die um 180° einander gegenüberliegenden Stützrollen 29 und 32 beispielsweise auf der einen Stirnseite und die beiden anderen ebenfalls um 180° einander gegenüberliegenden Stützrollen 30 und 31 auf der anderen Stirnseite angeordnet sein können.

Vorteilhaft an dieser Ausführungsform ist, dass die Dichtungen 20, 21 jeweils leichter zugänglich sind. Außerdem kann diese Ausführungsform auch bei beengten Platzverhältnissen eingesetzt werden. Erfindungsgemäß können auch Stützrollen eingesetzt werden, deren Mantelteile 18 eine ballige, d. h. konvexe, Außenkontur aufweisen und die in entsprechend ausgeformten Konturen auf den beiden Drehdurchführungsteilen abrollen.

In allen Ausführungsformen ist der gerätefeste Drehdurchführungsteil 12 gegenüber ortsfesten Bauteilen durch eine Drehmomentstütze abgestützt.

### Bezugszeichenliste

- 1: Drehdurchführung
- 2: gerätefester Drehdurchführungsteil
- 3: sich drehender Drehdurchführungsteil
- 4: Gehäuse
- 5: Medienzuleitung
- 6: Gleitring
- 6a: Schmierspalt
- 7: Kammer
- 8: Medienzuleitung
- 9: Medienleitung
- 10: Dichtung
- 11: Dichtung
- 12: gerätefester Drehdurchführungsteil
- 13: Stützrolle
- 14: Stützrolle
- 15: sich drehender Drehdurchführungsteil
- 16: Gehäuseteil
- 17: Achse
- 18: Mantelteil
- 19: ringförmiges Lager
- 20: Dichtung
- 21: Dichtung
- 22: Hohlraum
- 23: Medienzuführung
- 24: Medienzuleitung
- 25: Medienleitung
- 26: Stützrolle
- 27: Stützrolle
- 28: Stützrolle
- 29: Stützrolle
- 30: Stützrolle
- 31: Stützrolle
- 32: Stützrolle
- 33: Welle
- 34: Laufbund
- 35: Welle

## Patentansprüche

1. Walzenantrieb, umfassend eine Drehdurchführung zur Zufuhr und/oder zur Abfuhr eines druckbeaufschlagten Mediums in einen bzw. aus einem axialen Hohlraum eines sich drehenden Maschinenteils mit einem gerätefesten, sich nicht drehenden Durchführungsteil (12), einem sich drehenden Durchführungsteil (15) und mit Lagermitteln sowie mit Dichtmitteln (20, 21), die in einer radialen Dichtebene zwischen dem sich drehenden Durchführungsteil (15) und dem gerätefesten Durchführungsteil (12) wirksam sind, wobei die Lagermittel einzelne Stützlager in Form von Stützrollen (13, 14, 26, 27, 28, 29, 30, 31, 32) umfassen, die den radialen Abstand zwischen dem gerätefesten Drehdurchführungsteil (12) und dem sich drehenden Durchführungsteil (15) festlegen, wobei die Rollenlager der Stützrollen unter einer spielfreien Vorspannung stehen, derart, dass dadurch ein spielfreier Lauf des sich drehenden Drehdurchführungsteils (15) erreicht wird.

2. Walzenantrieb nach Anspruch 1,
**dadurch gekennzeichnet,**
**dass** die Stützrollen (13, 14, 26, 27, 28, 29, 30, 31, 32) durch Achsen, Wellen (33), Naben und/oder durch stirnseitige Führungsmittel, insbesondere durch Bünde (34), geführt sind.

3. Walzenantrieb nach Anspruch 2,
**dadurch gekennzeichnet,**
**dass** in einer radialen Ebene wenigstens zwei Stützrollen (13, 14) oberhalb der Wellenachse des sich drehenden Drehdurchführungsteils (15) angeordnet sind, die gegenüber dem sich nicht drehenden Drehdurchführungsteil (12) abgestützt sind.

4. Walzenantrieb nach Anspruch 3,
**dadurch gekennzeichnet,**
**dass** die Stützrollen (13, 14, 26, 27, 28, 29, 30, 31, 32) unter einem spitzen oder einem stumpfen Winkel zueinander angeordnet sind.

5. Walzenantrieb nach Anspruch 4,
**dadurch gekennzeichnet,**
**dass** drei Stützrollen (26, 27, 28), insbesondere in gleichen Abständen zueinander, vorgesehen sind.

6. Walzenantrieb nach einem der Ansprüche 1 bis 5,
**dadurch gekennzeichnet,**
**dass** die Stützrollen jeweils in einem sie tragenden Gehäuse, insbesondere in einem Wagen, integriert sind.

7. Walzenantrieb nach einem der Ansprüche 1 bis 6,
**dadurch gekennzeichnet,**
**dass** die Stützlager innerhalb oder außerhalb eines von dem Medium durchflossenen Raums angeordnet sind.

## Claims

1. Roll drive, comprising a rotary union for the feed and/or discharge of a pressurised medium into or from an axial cavity of a rotating machine part with a non-rotating union part (12) fixed relative to the equipment, a rotating union part (15) and with bearing means and sealing means (20, 21), which act in a radial sealing plane between the rotating union part (15) and the union part (12) fixed relative to the equipment, wherein the bearing means comprise individual support bearings in the form of support rollers (13, 14, 26, 27, 28, 29, 30, 31, 32) which fix the radial spacing between the rotary union part (12) fixed relative to the equipment and the rotating union part (15), wherein the roller bearings of the support roller are disposed under such a play-free bias that play-free running of the rotating rotary union part (15) is thereby achieved.

2. Roll drive according to claim 1, **characterised in that** the support rollers (13, 14, 26, 27, 28, 29, 30, 31, 32) are guided by axles, shafts (33), hubs and/or end guide means, particularly by collars (34).

3. Roll drive according to claim 2, **characterised in that** at least two support rollers (13, 14) are arranged above the shaft axis of the rotating rotary union part (15) in a radial plane and are supported relative to the non-rotating rotary union part (12).

4. Roll drive according to claim 3, **characterised in that** the support rollers (13, 14, 26, 27, 28, 29, 30, 31, 32) are arranged at an acute or obtuse angle relative to one another.

5. Roll drive according to claim 4, **characterised in that** three support rollers (26, 27, 28) are provided, in particular at the same spacings from one another.

6. Roll drive according to any one of claims 1 to 5, **characterised in that** the support rollers are respectively integrated in a housing, particularly a carriage, carrying them.

7. Roll drive according to any one of claims 1 to 6, **characterised in that** the support bearings are arranged inside or outside a space flowed through by the medium.

## Revendications

1. Entraînement par rouleaux, comprenant un passage tournant pour l'alimentation et/ou pour l'évacuation d'un milieu sollicité par pression dans, respectivement hors d'un espace axial creux d'une pièce mécanique en train de tourner, la pièce comprenant un élément de passage (12) non rotatif, fixé à un outil; un élément de passage rotatif (15) ; et des moyens faisant office de paliers, ainsi que des moyens d'étanchéité (20, 21) qui sont actifs dans un plan d'étanchéité radial entre l'élément de passage rotatif (15) et l'élément de passage (12) fixé ; dans lequel les moyens faisant office de paliers comprennent des paliers de support sous la forme de rouleaux de support (13, 14, 26, 27, 28, 29, 30, 31, 32) qui déterminent la distance radiale entre l'élément de passage (12) fixé et l'élément de passage rotatif (15) ; dans lequel les paliers à roulements des rouleaux de support sont mis dans un état de précontrainte en l'absence de jeu, d'une manière telle que l'on obtient ainsi une course en l'absence de jeu de la part de l'élément de passage rotatif (15).

2. Entraînement par rouleaux selon la revendication 1, **caractérisé en ce que** les rouleaux de support (13, 14, 26, 27, 28, 29, 30, 31, 32) sont guidés par des axes, des arbres (33), des moyeux et/ou par des moyens de guidage côté frontal, en particulier par des collets (34).

3. Entraînement par rouleaux selon la revendication 2, **caractérisé en ce que**, dans un plan radial, au moins deux rouleaux de support (13, 14) sont disposés au-dessus de l'axe d'arbre de l'élément de passage rotatif (15), en s'appuyant contre l'élément de passage non rotatif (12).

4. Entraînement par rouleaux selon la revendication 3, **caractérisé en ce que** les rouleaux de support (13, 14, 26, 27, 28, 29, 30, 31, 32) sont disposés en formant un angle aigu ou un angle obtus les uns par rapport aux autres.

5. Entraînement par rouleaux selon la revendication 4, **caractérisé en ce que** trois rouleaux de support (26, 27, 28) sont prévus en particulier à des distances égales les uns par rapport aux autres.

6. Entraînement par rouleaux selon l'une quelconque des revendications 1 à 5, **caractérisé en ce que** les rouleaux de support sont respectivement intégrés dans un logement qui les porte, en particulier dans un chariot.

7. Entraînement par rouleaux selon l'une quelconque des revendications 1 à 6, **caractérisé en ce que** les paliers de support sont disposés à l'intérieur ou à l'extérieur d'un espace traversé par le milieu.
